# EUROPEAN PATENT APPLICATION

(11) **EP 3 919 183 A1**
(43) Date of publication of application: **08.12.2021**
(21) Application number: 21177638.0
(22) Date of filing: 03.06.2021
(51) Int. Cl.: B05C 9/14, B05C 11/10, B29B 13/02, B27G 11/02

(54) **CART FOR STORING AND HEATING AT LEAST ONE GLUING DEVICE**

(30) Priority: 05.06.2020 IT 202000013366
(71) Applicant: SCM Group S.p.A., 47921 Rimini (RN) (IT)
(72) Inventor: GIANESINI, Nicolo', 47921 RIMINI (IT); PEGORARO, Raffaele, 47921 RIMINI (IT)
(74) Representative: Tiburzi, Andrea

(57) **Abstract**

The present invention relates to a cart (1) for storing and heating at least one gluing device (2) of the type comprising a container (21) for containing a quantity of solid glue and heating means (22) for heating said quantity of glue.

Said cart (1) comprises:
- a container (3) for containing said at least one gluing device (2),
- a power supply unit (103,104) for supplying power to said gluing device (2) and/or to a heating device (30) for heating the internal volume of said container (3), to be positioned in use inside said container (3), wherein said power supply unit is connected or connectable to a power supply network, so that, in use, said heating means (22) and/or said heating device (30) are/are powered, causing heating said quantity of glue contained in said gluing device (2) and changing said quantity of glue from a solid state to a liquid state.

The present invention also relates to a method for heating a quantity of glue contained in said gluing device (2) by means of said cart (1).

## Description

The present invention relates to a cart for storing and heating at least one gluing device.

### Field of the invention

In particular, the invention relates to the structure of a cart designed to contain one or more gluing devices and to allow the flow of an electric current in the gluing device, so that the amount of glue contained in said gluing device is subjected to a heating process to allow the application of said amount of glue on a workpiece, such as a wooden panel or on another material.

The gluing device comprises a receptacle containing a quantity of solid glue and electric heating means for heating said quantity of solid glue, and the cart is equipped with power supply means for supplying said electric heating means.

Said gluing device can be equipped with at least one roller to apply said quantity of glue on a workpiece or it can be without a roller.

In the following the description will be directed to a cart, in which at least one gluing device equipped with a roller (although not shown) is housed, and the glue is used for the wooden panels edge-banding .

However, the description should not be considered limited to this specific use.

### Prior Art

As is known, for finishing a panel made of wood or other material, edge-banding machines are used to edge-band the side surfaces of said panel, i.e., to apply an edge tape or band on said side surfaces.

In general, the panel edge-banding process involves a panel rectification step, in which the inaccuracies of a side surface of the panel are removed (for example an inaccuracy can be an amount of excess material on the side surface of the panel), a step of applying glue on said side surface for gluing an edge-band on said side surface, and a step of finishing of said edge by means of one or more working tools (such as for example a rounder) according to the finishing type.

In order that the glue be correctly applied on a side surface of the panel it is essential that the glue is heated, i.e., reaches the melting temperature.

The melting temperature can change according to the type of glue.

The glue is a solid glue and is contained in a receptacle of a gluing device (called "glue tank") and said gluing device can be removably coupled to the edge-banding machine.

In particular, the receptacle containing a quantity of glue is heated so that the glue reaches its melting temperature, so that the glue passes from a solid-state to a liquid state, and it is ready to be applied on the panel.

Once the glue is applied to the panel, the gluing device can be removed from the edge-banding machine to allow the receptacle to be cleaned and, if necessary, inserting an additional quantity of glue, different from the one used, into the receptacle for further applications.

The glue can be a hotmelt glue (whose melting temperature is typically 200° C), preferably an EVA glue ("Ethylene Vinyl Acetate"), or a polyurethane glue (whose melting temperature is typically 140°).

The hotmelt glue is a reversible glue, i.e., a glue that can be heated several times without its chemical-physical characteristics being altered.

Unlike a hotmelt glue, polyurethane glue is a glue which has a higher resistance than the resistance of the hotmelt glue.

Currently, known solutions are conceived to preserve at least one gluing device for a determined time interval, removing the humidity from the housing in which said at least one gluing device is housed and/or maintaining the temperature inside the housing, not to alter the chemical-physical characteristics of the glue contained in said gluing device.

In particular, the known solutions provide for a cart, which has a housing, inside which one or more gluing devices are arranged, and the air is removed from such housing, to reduce or eliminate the humidity by means of a device for generating a depression inside said housing.

In addition, after having generated a depression inside the housing, it is possible to introduce an inert gas into said housing through a gas delivery device, in such a way as to avoid that the glue is subjected to a curing process and it is no longer usable.

For example, said gas delivery device can comprise one or more nitrogen cylinders.

A disadvantage of these known solutions is given by the complexity of the cart structure, due to the necessary presence of at least one device to generate a depression inside the housing and, for some solutions, to the necessary presence of at least one gas delivery device.

A further disadvantage is given by the high cost for realizing said cart.

### Scope of the invention

The scope of the invention is to overcome said disadvantages by providing a cart for storing at least one gluing device and for heating an amount of glue contained in said gluing device, wherein said cart has a simple structure and a low realization cost.

Further scope of the invention is to provide a cart equipped with a container designed to store and heat said at least one gluing device.

### Object of the invention

It is therefore specific object of the present invention a cart for storing and heating at least one gluing device, wherein said gluing device is of the type comprising a receptacle containing a quantity of solid glue, heating means for heating said quantity of glue, said cart comprising:
- a container for containing said at least one gluing device,
- a power supply unit for supplying power to said gluing device and/or to a heating device for heating the internal volume of said container, to be positioned in use inside said container, wherein said power supply unit is connected or connectable to a power supply network, so that, in use, said heating means and/or said heating device are/are powered, causing heating said quantity of glue contained in said gluing device and changing said quantity of glue from a solid-state to a liquid state.

In particular, said power supply unit may comprise first power supply means for supplying power to said heating means of said gluing device and/or second power supplying means for supplying power to said heating device.

With reference to the heating device, said heating device may be a resistor.

With reference to the first power supplying means, said first power supplying means may comprise a power electric connector couplable to an electric connector of said gluing device, wherein said electric connector is connected to said heating means.

With reference to the container, said container may have an opening to allow the insertion and extraction of said gluing device in/from said container, and in that said cart comprises a lid to close said opening.

In particular, said cart may comprise a frame, and said cart may be provided with blocking means for blocking said lid to the frame itself, so as to prevent a quantity of air enters the container.

Further, said container may be thermally isolated from the external environment.

According to a first aspect of the invention, said cart may comprise a storage and heating unit, inside which said container is arranged, and a support unit to support said at least one gluing device.

According to a second aspect of the invention, said cart may comprise an inert gas supplying device for supplying at least one inert gas inside said container and/or a depression generating device for generating a depression inside said container.

The present invention also refers to a method for heating a quantity of glue contained in at least one gluing device, wherein said gluing device is of the type comprising a container containing a quantity of solid glue, heating means for heating said amount of glue

Said method comprises the following steps:
A) providing a cart mentioned above;
B) opening said container of said cart;
C) inserting said gluing device inside said container of said cart;
D) supplying power to said heating means and/or to a heating device, causing heating the quantity of glue contained in said gluing device.

Further, said method may comprise the step of closing said container.

When said container is closed, said method may further comprise the following step(s):
- create a depression inside said container and/or introduce a quantity of inert gas inside said container.

### Brief description of the drawings

The present invention will be now described, for illustrative but not limitative purposes, according to its preferred embodiments, with particular reference to the figures of the enclosed drawings, wherein:
figure 1 is a perspective view of a cart for storing and heating at least one gluing device, according to the invention, in which said cart is in a closed configuration and two gluing devices are arranged on a support plane of said cart;
figure 2 is a further perspective view of the cart of figure 1 ;
figure 3 shows the cart of figure 1 in an open configuration for showing a container, arranged inside said cart and sized to receive said two gluing devices;
figure 4 shows in detail the container containing said two gluing devices, from which a heating device for heating said container has been removed;
figures 5A and 5B show a respective perspective view of the container of figure 4;
figure 6 is a side sectional view of the cart of figure 1 in closed configuration, when the gluing devices are arranged inside the container to be subjected to a heating process.

In the various figures similar parts will be indicated with the same numerical references.

### Detailed description of the invention

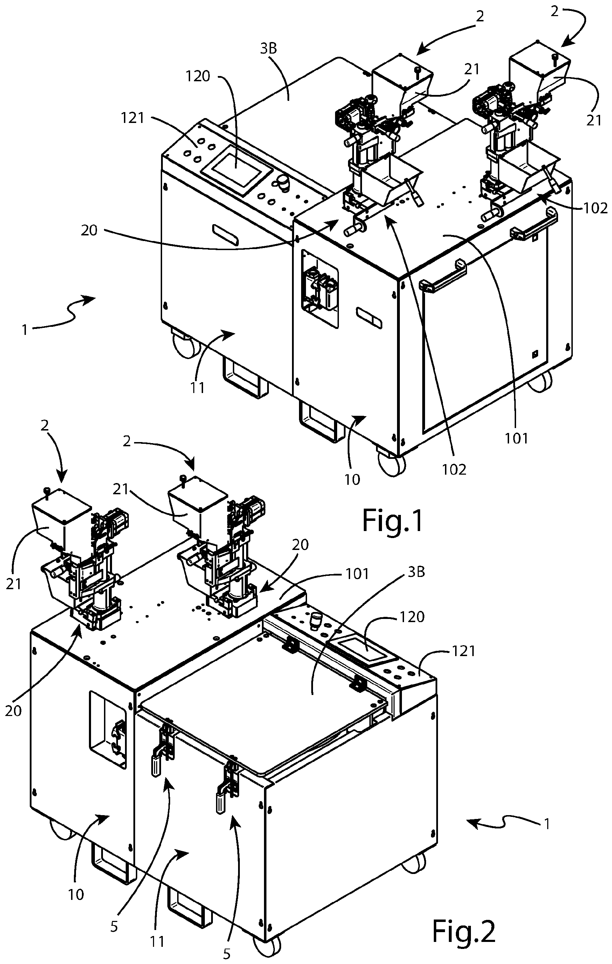

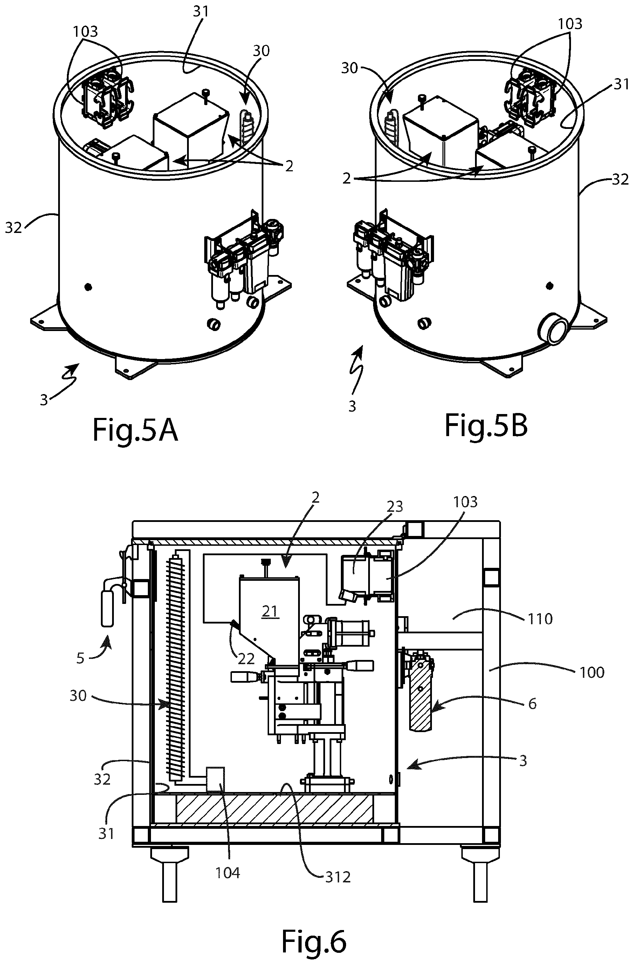

With reference to figures 1-6, a cart 1 is described for storing and heating at least one gluing device 2.

The gluing device 2 is not an object of the invention.

However, it is necessary to mention some technical features of the gluing device 2 to explain the operation of the cart 1, object of the invention, with respect to said gluing device 2.

With reference to the gluing device 2, said gluing device 2 comprises a receptacle 21 containing a quantity of solid glue, heating means 22 to heat said amount of glue, an electric connector 23, as well as a roller (not shown) to apply the glue onto a workpiece, such as a wooden panel.

In the embodiment which is described, the receptacle 21 of said gluing device 2 has an opening closed by a door.

The opening of the door allows the insertion of an amount of glue inside said receptacle 21.

The insertion of the glue inside the receptacle 21 of the gluing device 2 can be a manual or automated operation.

The shape of said receptacle 21 is preferably conical, to ease the flow of the glue (once the glue has reached a liquid state) downwards, i.e. towards the roller.

Said gluing device 2 has a substantially vertical development body, in which said receptacle 21 is arranged in the upper part of said body, and said roller is arranged in the lower part of said body.

Said heating means 22 are arranged inside said gluing device 2 in such a way that, in use, the amount of glue contained in the receptacle 21 is heated, causing the passage of said amount of glue from a solid state to a liquid state.

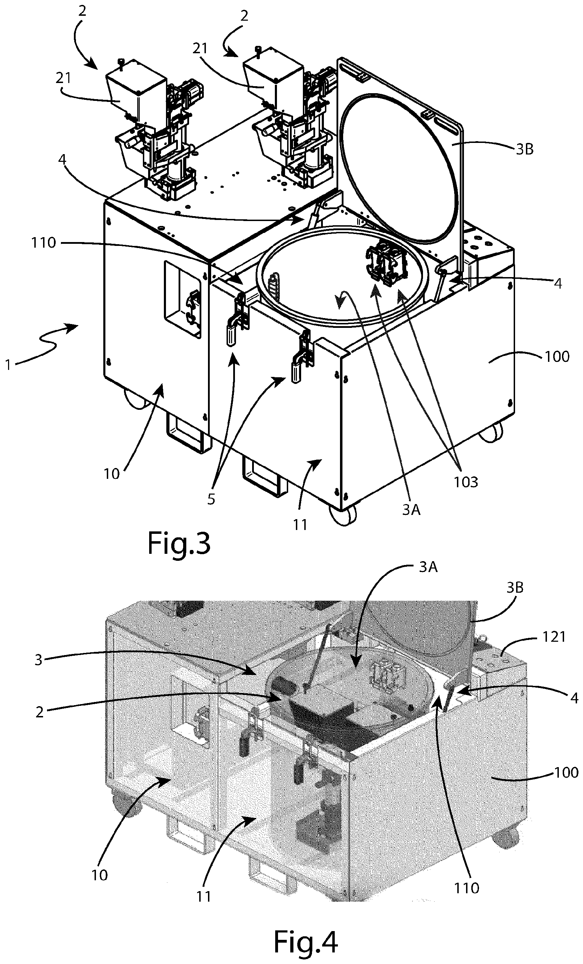

As shown in figure 3, said heating means 22 are connected to said electric connector 23.

In the embodiment which is described, said heating means 22 are electric heating means.

In particular, in the embodiment that is described, said heating means 22 can comprise at least one electric cable for flowing an electric current, in which said at least one electric cable is connected to said electric connector 23.

However, said heating means 22 can be induction heating means, without departing from the scope of the invention.

With reference to the cart 1, said cart 1 comprises a supporting unit 10 for supporting said at least one gluing device 2, when it is not necessary to heat an amount of glue contained in the gluing device 2, and a storage and heating unit 11, to preserve said gluing device 2 and to heat the amount of glue contained therein.

Said storage and heating unit 11 can be connected or connectable to said supporting unit 10 or arranged next to said supporting unit 10.

In the embodiment that is described, said supporting unit 10 and said storage and heating unit 11 are separated, as indicated by the solid line in figures 1, 2 and 4, and arranged side-by-side.

With reference to the supporting unit 10, said supporting unit 10 comprises a supporting plane 101 to support said at least one gluing device 2.

In particular, said supporting plane 101 is equipped with at least one seat (not shown in the figures), for housing the roller of a respective gluing device 2, wherein a portion of said roller projects from a base 20 of said gluing device 2.

Furthermore, said supporting plane 101 is equipped with at least one blocking element 102, close to said at least one seat, to block said base 20 to said supporting plane 101.

With reference to the storage and heating unit 11, said storage and heating unit 11 comprises a container 3 (arranged inside said storage and heating unit 11), designed to house or contain said at least one gluing device 2 and to supply said gluing device 2.

In particular, said container 3 is arranged within a compartment 110 (open at the top) present in said storage and heating unit 11.

With particular reference to said container 3, said container 3 has an opening 3A for inserting and extracting said at least one gluing device 2 into/from said container 3.

In the embodiment that is described, said container 3 is sized to contain two gluing devices 2.

However, said container 3 can be sized to receive any number of gluing devices 2.

For example, said container 3 can be sized to receive a single gluing device 2 or a number of gluing devices 2 greater than two.

Furthermore, in the embodiment which is described, said container 3 has a cylindrical section.

However, said container 3 can have any section, without departing from the scope of the invention.

Furthermore, the opening 3A of said container 3 is closed by a lid 3B.

In the embodiment that is described, said lid 3B is constrained to a frame 100 of the cart 1 by means of one or more hinges 4 (in the embodiment which is described, the lid 3B is constrained to the frame by two hinges 4).

In particular, in the embodiment which is described, said lid 3B is sized not only to close the opening 3A of the container 3, but also the opening of the compartment 110 (in which said container 3 is arranged).

However, it is not necessary that said lid 3B be sized to close the opening of said compartment 110, but it is sufficient that it closes the opening 3A of the container 3.

Furthermore, said frame 100 is equipped with one or more blocking means 5, for blocking said lid 3B to the frame itself, so that said container 3 is hermetically isolated from the external environment to avoid that an amount of air enters in the container.

In other words, any exchange of air between the inside of the container and the external environment is avoided.

Said blocking means 5 comprise at least one blocking hook.

In the embodiment that is described, said blocking means 5 comprise two locking hooks.

Advantageously, said container 3 can be thermally insulated from the external environment.

Furthermore, said container 3 comprises a power supply unit for supplying said gluing device 2, in which said power supply unit is connected or connectable to a power supply network (not shown), so as to cause the heating of the amount of glue contained in the gluing device and the passage of said amount of glue from a solid state to a liquid state.

Said power supply unit comprises respective first power supply means, which can be coupled to a respective electric connector 23 of each gluing device 2.

Said first power supply means comprise a respective first electrical power supply connector 103, which can be coupled to a respective electric connector 23 of each gluing device 2, so that, in use, the respective heating means 2 of the gluing devices 2 are powered.

In particular, each first electrical power supply connector 103 is shaped to form a shape coupling with a respective electric connector 23 of each gluing device.

The container 3 has a first surface or internal surface 31 and a second surface or external surface 32.

In the embodiment that is described, each first electrical power supply connector 103 is arranged on said internal surface 31.

However, each electrical power supply connector 103 can be arranged on the internal surface 31 of said lid 3B, without departing from the invention.

A supporting element 312 is arranged inside said container 3 and connected to said internal surface 31, wherein said supporting element 312 is provided with a respective seat (not shown) for receiving the roller of a respective gluing device 2, to block the respective gluing device 2 on said supporting element 312.

When the gluing device 2 is inserted inside the container 3 of the cart 1, said gluing device 2 is perpendicular or substantially perpendicular to said supporting element 312.

In the embodiment which is described, said container 3 comprises a heating device 30 for heating said container (i.e., the internal volume of said container) and consequently also the gluing device 2, wherein said heating device 30 is arranged inside of said container 3, and said power supply unit also supply said heating device 30.

However, the presence of said heating device 30 inside the container 3 is not necessary.

In fact, said heating device 30 can be positioned if necessary inside said container 3.

In particular, said power supply unit comprises second supply means for supply said heating device 30.

Said second power supply means comprise a second electrical power supply connector 104.

In the embodiment that is described, said second power supply means are arranged inside said container 3, in particular on said supporting element 312.

However, said second power supply means can be arranged on the internal surface 31 of said lid 3B or in general on said lid 3B, without departing from the invention.

In particular, in the embodiment which is described, said heating device 30 is a resistor.

Advantageously, said cart 1 comprises an inert gas delivery device 6, for delivering said at least one inert gas inside said container 3 to avoid the glue contained in the gluing devices being subjected to a curing process.

In the embodiment which is described, said delivery device is a dry air delivery device.

By dry air is meant air with a relative humidity percentage lower than 30%, preferably lower than 18%, even more preferably lower than 10%.

In the embodiment which is described, said dry air delivering device is arranged outside said container 3.

In particular, said dry air delivering device 6 has at least one portion in contact with the external surface 32 of the container 3.

However, said dry air delivering device 6 can be arranged inside the container 3, without departing from the scope of the invention.

Alternatively, or in combination with said dry air delivery device 6, said cart 1 can comprise a depression generation device (not shown) for generating a depression inside said container 3, such as for example a vacuum pump.

In case of said cart 1 comprises both a depression generation device and a dry air delivering device, it is desirable that first a vacuum condition is generated inside the container 3 and then a quantity of dry air is introduced inside the container 3.

Furthermore, said cart 1 is equipped with movement means to be moved by an operator.

For example, said movement means can comprise a plurality of wheels.

However, it is not necessary that said cart 1 is equipped with said movement means (intended as the aforementioned wheels), but can be moved by external devices, such as for example a forklift or other devices equipped with wheels.

The operation of cart 1 is described below.

Once one or more gluing devices 2 are inserted (manually or automatically) inside said container 3, each gluing device 2 is arranged on the supporting element 312 (in which a respective seat of said supporting element houses the roller of a respective gluing device 2) and connected to a respective first electrical power supply connector 103.

Subsequently, a vacuum condition is generated inside said container 3, to remove the air contained therein and/or an amount of dry air is introduced inside said container 3 to avoid that the amount of glue contained inside each gluing device 2 undergoes a curing process.

At this point, the operator can manually, through a button on a control panel 121, or remotely, through a mobile electronic device, such as a smartphone, a tablet or a computer, allow the passage of an electric current from the power supply unit towards said heating means 22 and/or towards said heating device 30, for heating the amount of glue in each gluing device 2 until said amount of glue reaches its own melting temperature.

The control panel 121 is arranged on said storage and heating unit 11.

By means of said control panel 121 it is possible to activate the depression generation device to create a vacuum condition inside the container 3, and/or to activate the dry air delivery device 6 to introduce an amount of dry air inside of the container 3.

Since each gluing device 2, although not shown in the figures, comprises a first pneumatic cylinder for opening/closing a shutter in order to allow/prevent the passage of an amount of glue from the receptacle 21 to the roller, and a second pneumatic cylinder, for opening/closing a dispenser, in order to adjust the amount of glue that goes from the receptacle 21 to the roller, by means of the control panel 121 it is possible to control the opening/closing of said shutter, and the opening/closing of said dispenser.

Furthermore, the control panel 121 comprises display means 120 (for example comprising a display), for displaying the temperature value and/or the humidity value inside the container 3, in which said values are respectively detected by a temperature sensor and a humidity sensor arranged inside the container.

Due to the electrical connection between each electric connector 23 and the respective first electrical power supply connector 103, an electric current flows into the respective electric heating means 22 of each gluing device 2, causing the heating of the amount of glue that is in each receptacle 21 of each gluing device 2.

Each amount of glue is subjected to a heating process and passes from a solid state to a liquid state, so as to be ready to be applied on a side surface of the panel to be machined, by means of the respective roller.

Once each amount of glue has reached the melting temperature, the container 3 is opened and each gluing device 2 is extracted, manually or automatically, and made available for further machining by the edge-banding machine.

The present invention also refers to a method for heating an amount of glue contained in one or more gluing devices 2, wherein each gluing device 2 is of the type comprising a respective receptacle 21, containing a quantity of solid glue, respective heating means 22, to heat said amount of glue, and a respective electric connector 23.

Said method comprises the following steps:
A) providing a cart 1 described above;
B) opening said container 3 of said cart 1,
C) inserting one or more gluing devices 2 inside said container 3 of said cart 1;
D) supplying the respective heating means 22 of said gluing devices 2 and/or said heating device 30, causing the heating of the amount of glue contained in each gluing device 2.

Said method can comprise before step D, the step of closing the container 3.

Furthermore, when the container 3 is closed, before step D, said method can further comprise the following step(s):
- creating a depression inside said container 3 and/or introducing a quantity of inert gas (such as dry air) into said container 3.

In other words, it is not necessary to close the container 3 during the heating of the glue.

However, if before heating the glue, it is necessary creating depression and/or introducing an amount of inert gas inside of the container 3, said container 3 has to be closed.

### Advantages

Advantageously, as already mentioned, the cart object of the present invention has a simple structure from the mechanical and electrical point of view.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Cart (1) for storing and heating at least one gluing device (2), wherein said gluing device (2) is of the type comprising a receptacle (21) containing a quantity of solid glue, heating means (22) for heating said quantity of glue, said cart (1) comprising:
- a container (3) for containing said at least one gluing device (2),
- a power supply unit (103,104) for supplying power to said gluing device (2) and/or to a heating device (30) for heating the internal volume of said container (3), to be positioned in use inside said container (3), wherein said power supply unit is connected or connectable to a power supply network, so that, in use, said heating means (22) and/or said heating device (30) are/are powered, causing heating said quantity of glue contained in said gluing device (2) and changing said quantity of glue from a solid state to a liquid state.

2. Cart (1) according to the previous claim, **characterized in that** said power supply unit (103,104) comprises first power supply means (103) for supplying power to said heating means (22) of said gluing device (2) and/or second power supplying means (104) for supplying power to said heating device (30).

3. Cart (1) according to the claim 1 or 2, **characterized in that** said heating device (30) (30) is a resistor.

4. Cart (1) according to claim 1 or 2, **characterized in that** said first power supplying means (103) comprise a power electric connector (103) couplable to an electric connector (23) of said gluing device (2), wherein said electric connector (23) is connected to said heating means (22).

5. Cart (1) according to any one of the previous claims, **characterized in that** said container (3) has an opening (3A) to allow the insertion and extraction of said gluing device (2) in/from said container (3), and **in that** said cart (1) comprises a lid (3B) to close said opening (3A).

6. Cart (1) according to the previous claim, **characterized in that** said cart (1) comprises a frame (100) and **in that** said cart (1) is provided with blocking means (5) for blocking said lid (3B) to the frame (100) itself, so as to prevent a quantity of air enters the container (3).

7. Cart (1) according to any one of the previous claims, **characterized in that** said container (3) is thermally isolated from the external environment.

8. Cart (1) according to any one of the previous claims, **characterized in that** said cart (1) comprises a storage and heating unit (11), inside which said container (3) is arranged, and a support unit (10) to support said at least one gluing device (2).

9. Cart (1) according to any one of the previous claims, **characterized in that** said cart (1) comprises an inert gas supplying device (6) for supplying at least one inert gas inside said container (3) and/or a depression generating device for generating a depression inside said container (3).

10. Method for heating a quantity of glue contained in at least one gluing device (2), wherein said gluing device (2) is of the type comprising a container (21) containing a quantity of solid glue, heating means (22) for heating said amount of glue, wherein said method comprises the following steps:
A) providing a cart (1) according to any one of claims 1-9;
B) opening said container (3) of said cart (1);
C) inserting said gluing device (2) inside said container (3) of said cart (1);
D) supplying power to said heating means (22) and/or to a heating device (30), causing heating the quantity of glue contained in said gluing device (2).

11. Method according to the previous claim, **characterized in that**, before step D, said method comprises the step of closing said container (3).

12. Method according to the previous claim, **characterized in that**, when said container (3) is closed, said method further comprises the following step(s):
- create a depression inside said container (3) and/or introduce a quantity of inert gas inside said container (3).
